# EUROPÄISCHE PATENTSCHRIFT

(11) **EP 2 710 269 B1**
(45) Veröffentlichungstag und Bekanntmachung des Hinweises auf die Patenterteilung: **21.10.2015**
(21) Anmeldenummer: 12716377.2
(22) Anmeldetag: 19.04.2012
(51) Int. Cl.: F16B 15/08

(54) **AUFNAHMEELEMENT UND BEFESTIGUNGSELEMENTE-MAGAZINSTREIFEN**
RECEIVING ELEMENT AND FIXING ELEMENT MAGAZINE STRIP
ÉLÉMENT DE RÉCEPTION ET BANDE-CHARGEUR À ÉLÉMENTS DE FIXATION

(30) Priorität: 20.05.2011 DE 102011076239
(43) Veröffentlichungstag der Anmeldung: 26.03.2014
(73) Patentinhaber: HILTI Aktiengesellschaft, 9494 Schaan (LI)
(72) Erfinder: BINDIG, Christian, 95632 Wunsiedel (DE); GRAZIOLI, Mario, CH-7000 Chur (CH)
(74) Vertreter: Hilti Aktiengesellschaft Corporate Intellectual Property
(86) Internationale Anmeldenummer: PCT/EP2012/057110
(87) Internationale Veröffentlichungsnummer: WO 2012/159827

(56) Entgegenhaltungen:
- DE-A1- 19 957 109
- DE-B3-102008 044 368
- US-A- 3 891 087
- US-A1- 2010 329 818

## Beschreibung

### Technisches Gebiet

Die Erfindung betrifft ein Aufnahmeelement für ein erstes und ein zweites Befestigungselement zur Verwendung in Bolzensetzgeräten, mit einer Aufnahme für das erste Befestigungselement und mit einem Verbindungsansatz, der zusammen mit dem zweiten Befestigungselement dazu dient, das Aufnahmeelement schwenkbar mit einem zweiten Aufnahmeelement zu verbinden. Die Erfindung betrifft des Weiteren einen Befestigungselemente-Magazinstreifen mit mehreren Befestigungselementen, die durch derartige Aufnahmeelemente schwenkbar miteinander verbunden sind.

### Stand der Technik

Aus der deutschen Patentschrift DE 10 2008 044 368 B3 ist ein Befestigungselemente-Magazinstreifen mit einem über mehrere miteinander verbundene Streifensegmente gebildeten Trägerstreifen bekannt, wobei die Streifensegmente Aufnahmen aufweisen, in denen jeweils ein Befestigungselement gelagert ist, wobei jeweils zwei zueinander benachbarte Streifensegmente über jeweils ein Befestigungsmittel kettengliedartig miteinander verbunden sind.

### Darstellung der Erfindung

Aufgabe der Erfindung ist es, die Handhabung, Herstellung und/oder Magazinierung von Befestigungselementen für die Verwendung in Bolzensetzgeräten zu vereinfachen.

Die Aufgabe ist bei einem Aufnahmeelement für ein erstes und ein zweites Befestigungselement zur Verwendung in Bolzensetzgeräten, mit einer Aufnahme für das erste Befestigungselement und mit einem Verbindungsansatz, der dazu dient, das Aufnahmeelement scharnierartig, kettengliedartig und/oder schwenkbar mit einem zweiten Aufnahmeelement zu verbinden, dadurch gelöst, dass der Verbindungsansatz eine Rast-und/oder Schnappaufnahme für das zweite Befestigungselement und/oder das zweite Aufnahmeelement aufweist. Das erste Befestigungselement ist zum Beispiel in der Aufnahme des ersten Aufnahmeelements angeordnet. Die erfindungsgemäße Rast- und/oder Schnappaufnahme dient dazu, das erste Aufnahmeelement mit dem zweiten Aufnahmeelement oder dem zweiten Befestigungselement zu verbinden, das wiederum in einer Aufnahme des zweiten Aufnahmeelements aufgenommen ist. Gemäß einem wesentlichen Aspekt der Erfindung werden zwei Aufnahmeelemente dadurch miteinander verbunden, dass die Rast- und/oder Schnappaufnahme des ersten Aufnahmeelements das zweite Befestigungselement oder das zweite Aufnahmeelement umgreift. Die Rast- und/oder Schnappaufnahme liefert dabei den Vorteil, dass die Aufnahmeelemente wiederholt zerstörungsfrei trennbar miteinander verbunden werden können.

Ein bevorzugtes Ausführungsbeispiel des Aufnahmeelements ist dadurch gekennzeichnet, dass die Aufnahme für das erste Befestigungselement eine Ausnehmung für die Rast- und/oder Schnappaufnahme eines dritten Aufnahmeelements aufweist. Die Rast- und/oder Schnappaufnahme des ersten Aufnahmeelements dient dazu, das erste Aufnahmeelement mit einem zweiten Befestigungselement in dem zweiten Aufnahmeelement zu verbinden. Die Ausnehmung in dem ersten Aufnahmeelement dient dazu, das dritte Aufnahmeelement mit dem ersten Befestigungselement zu verbinden. Durch die erfindungsgemäße Gestaltung des Aufnahmeelements können beliebig viele Aufnahmeelemente, die jeweils ein Befestigungselement aufnehmen, schwenkbar miteinander verbunden werden.

Ein weiteres bevorzugtes Ausführungsbeispiel des Aufnahmeelements ist dadurch gekennzeichnet, dass die Ausnehmung etwas größer als die Rast- und/oder Schnappaufnahme des dritten Aufnahmeelements ist. Dadurch wird zum einen das Herstellen der schwenkbaren Verbindung zwischen dem Aufnahmeelement und dem jeweiligen Befestigungselement vereinfacht. Darüber hinaus ermöglichen die größeren Abmessungen der Ausnehmung ein Verschwenken der beiden Aufnahmeelemente relativ zueinander. Über die Größe der Ausnehmung kann der Schwenkwinkel der Aufnahmeelemente relativ zueinander begrenzt werden.

Ein weiteres bevorzugtes Ausführungsbeispiel des Aufnahmeelements ist dadurch gekennzeichnet, dass die Aufnahme für das erste Befestigungselement ein zentrales Durchgangsloch ist, das sich durch einen Aufnahmegrundkörper erstreckt. Der Innendurchmesser des zentralen Durchgangslochs entspricht vorzugsweise dem Außendurchmesser der Befestigungselemente.

Ein weiteres bevorzugtes Ausführungsbeispiel des Aufnahmeelements ist dadurch gekennzeichnet, dass der Aufnahmegrundkörper die Gestalt eines geraden Kreiszylinders aufweist, der durch die Ausnehmung für die Rast- und/oder Schnappaufnahme des dritten Aufnahmeelements unterbrochen ist. Die Ausnehmung hat vorzugsweise die Gestalt eines Schlitzes, der senkrecht zu einer Längsachse des Aufnahmegrundkörpers verläuft.

Ein weiteres bevorzugtes Ausführungsbeispiel des Aufnahmeelements ist dadurch gekennzeichnet, dass der Aufnahmekörper durch die Ausnehmung für die Rast- und/oder Schnappaufnahme des dritten Aufnahmeelements in zwei Halbkörper unterteilt ist, die durch einen Verbindungssteg miteinander verbunden sind. Die zwei Halbkörper haben im Wesentlichen die Gestalt von geraden Kreiszylindermänteln.

Ein weiteres bevorzugtes Ausführungsbeispiel des Aufnahmeelements ist dadurch gekennzeichnet, dass die Rast- und/oder Schnappaufnahme von dem Verbindungssteg ausgeht. Die Rast- und/oder Schnappaufnahme erstreckt sich von dem Verbindungssteg, bezogen auf den Außendurchmesser des Aufnahmegrundkörpers, vorzugsweise radial nach außen.

Ein weiteres bevorzugtes Ausführungsbeispiel des Aufnahmeelements ist dadurch gekennzeichnet, dass die Rast- und/oder Schnappaufnahme und der Verbindungssteg durch ein Distanzstück einstückig miteinander verbunden sind. Durch die Länge des Distanzstücks wird der Abstand zwischen den Befestigungselementen und der Schwenkwinkel zwischen zwei Aufnahmeelementen beeinflusst beziehungsweise definiert.

Ein weiteres bevorzugtes Ausführungsbeispiel des Aufnahmeelements ist dadurch gekennzeichnet, dass die Rast- und/oder Schnappaufnahme die Gestalt eines Kreisbogens aufweist, der das zweite Befestigungselement oder das zweite Aufnahmeelement teilweise umgreift. Der Kreisbogen erstreckt sich bevorzugt in einem Winkelbereich von mehr als 180 Grad, aber weniger als 270 Grad, um das Befestigungselement herum. Dabei ist die Länge des Kreisbogens besonders bevorzugt so mit dem Material abgestimmt, aus dem die Rast- und/oder Schnappaufnahme gebildet ist, dass die Rast- und/oder Schnappaufnahme wiederholt zerstörungsfrei mit dem Befestigungselement verbunden werden kann. Bei dem Material, aus dem die Rast- und/oder Schnappaufnahme gebildet ist, handelt es sich vorzugsweise um ein elastisches Material, vorzugsweise ein elastisches Kunststoffmaterial. Ein weiteres bevorzugtes Ausführungsbeispiel des Aufnahmeelements ist dadurch gekennzeichnet, dass zwei freie Enden der Rast- und/oder Schnappaufnahme in einem Abstand zueinander angeordnet sind, der kleiner als der Außendurchmesser der Befestigungselemente beziehungsweise der Aufnahme eines zweiten Aufnahmeelements ist. Dadurch wird sichergestellt, dass sich das Befestigungselement beziehungsweise die Aufnahme des zweiten Aufnahmeelements nicht in unerwünschter Weise aus der Rast- und/oder Schnappaufnahme löst. Die Rast- und/oder Schnappaufnahme kann auch gegen das Befestigungselement beziehungsweise die Aufnahme des zweiten Aufnahmeelements vorgespannt sein.

Ein weiteres bevorzugtes Ausführungsbeispiel des Aufnahmeelements ist dadurch gekennzeichnet, dass ein Innendurchmesser der Rast- und/oder Schnappaufnahme dem Außendurchmesser der Befestigungselemente beziehungsweise der Aufnahme entspricht. Dadurch wird auf einfache Art und Weise eine stabile Verbindung zwischen zwei Aufnahmeelementen ermöglicht.

Ein weiteres bevorzugtes Ausführungsbeispiel des Aufnahmeelements ist dadurch gekennzeichnet, dass die Aufnahmeelemente als Gleichteile ausgeführt sind. Dadurch wird auf einfache Art und Weise die Herstellung von beliebig langen Magazinstreifen ermöglicht.

Ein weiteres bevorzugtes Ausführungsbeispiel des Aufnahmeelements ist dadurch gekennzeichnet, dass die Befestigungselemente als Gleichteile ausgeführt sind. Vorzugsweise ist jeweils ein Befestigungselement in der Aufnahme eines Aufnahmeelements angeordnet. Gleichzeitig wird das Befestigungselement von einer Rast- und/oder Schnappaufnahme eines benachbarten Aufnahmeelements umgriffen.

Ein weiteres bevorzugtes Ausführungsbeispiel des Aufnahmeelements ist dadurch gekennzeichnet, dass das Aufnahmeelement als Spritzgussteil aus Kunststoff ausgeführt ist. Dadurch wird die Herstellung der Aufnahmeelemente vereinfacht. Gegebenenfalls können die Befestigungselemente bei der Herstellung mit den Aufnahmeelementen umspritzt werden.

Die Erfindung betrifft des Weiteren einen Befestigungselemente-Magazinstreifen mit mehreren Befestigungselementen, die durch vorab beschriebene Aufnahmeelemente scharnierartig, kettengliedartig und/oder schwenkbar miteinander verbunden sind. Bei den Befestigungselementen handelt es sich vorzugsweise um Nägel oder Bolzen, die aus Metall gebildet sind. Der Befestigungselemente-Magazinstreifen wird zum Beispiel in einem Bolzensetzgerät dazu verwendet, einen Vorrat an Befestigungselementen bereitzustellen, die mit Hilfe des Bolzensetzgeräts in einen Untergrund eingetrieben werden. Dabei werden die Befestigungselemente vorzugsweise einzeln von dem Befestigungselemente-Magazinstreifen entnommen.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Es zeigen:
- Figur 1: ein erfindungsgemäßes Aufnahmeelement im Längsschnitt;
- Figur 2: eine perspektivische Darstellung des Aufnahmeelements aus Figur 1;
- Figur 3: das Aufnahmeelement aus den Figuren 1 und 2 in einer Vorderansicht, einer Seitenansicht und einer Draufsicht;
- Figur 4: eine Vorderansicht, eine Draufsicht und eine Seitenansicht von zwei Aufnahmeelementen, die mit Hilfe eines Befestigungselements schwenkbar miteinander verbunden sind;
- Figur 5: die beiden Aufnahmeelemente aus Figur 4 im Längsschnitt;
- Figur 6: eine perspektivische Darstellung der beiden Aufnahmeelemente mit dem Befestigungselement aus den Figuren 4 und 5;
- Figur 7: zwei Aufnahmeelemente in einer Draufsicht und
- Figur 8: zwei Aufnahmeelemente in einer Draufsicht.

### Ausführungsbeispiele

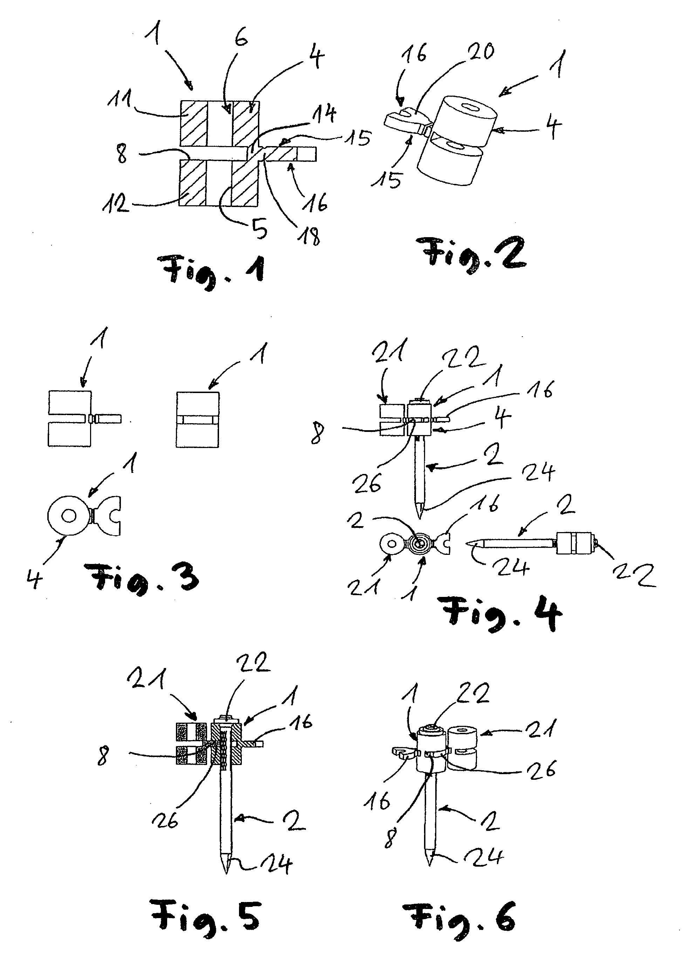

In den Figuren 1 bis 3 ist ein Aufnahmeelement 1 in verschiedenen Ansichten dargestellt. In den Figuren 4 bis 6 ist das Aufnahmeelement 1 zusammen mit einem Befestigungselement 2 und einem zweiten Aufnahmeelement 21 in verschiedenen Ansichten dargestellt.

Die Aufnahmeelemente 1 und 21 sind als Gleichteile ausgeführt und können mit dem Befestigungselement 2 auf einfache Art und Weise schwenkbar miteinander verbunden werden, um einen beliebig langen Streifen aus einer Vielzahl von Aufnahmeelementen und Befestigungselementen zu bilden. Dabei ist jedem Aufnahmeelement ein Befestigungselement zugeordnet. Jedes Aufnahmeelement kann mit zwei weiteren Aufnahmeelementen schwenkbar verbunden werden.

Das Aufnahmeelement 1 umfasst einen Aufnahmegrundkörper 4, der die Gestalt eines geraden Kreiszylinders mit einem zentralen Durchgangsloch 5 aufweist. Das zentrale Durchgangsloch 5 stellt eine Aufnahme 6 für ein Befestigungselement dar, wie es in den Figuren 4 bis 6 mit 2 bezeichnet ist.

Der Aufnahmegrundkörper 4 weist, bezogen auf seine Längsausdehnung, in der Mitte eine Ausnehmung 8 auf, die als Schlitz ausgeführt ist. Durch die Ausnehmung 8 wird der Aufnahmegrundkörper 4 in zwei Halbkörper 11, 12 unterteilt, die durch einen Verbindungssteg 14 einstückig miteinander verbunden sind.

Von dem Verbindungssteg 14 erstreckt sich ein Verbindungsansatz 15 radial nach außen. Der Verbindungsansatz 15 umfasst eine Rast- und/oder Schnappaufnahme 16 für ein Befestigungselement. Durch ein Distanzstück 18 ist die Rast- und/oder Schnappaufnahme 16 des Verbindungsansatzes 15 einstückig mit dem Verbindungssteg 14 verbunden.

Die Rast- und/oder Schnappaufnahme 16 hat die Gestalt eines Kreisbogens 20, dessen Innendurchmesser dem Außendurchmesser der Befestigungselemente entspricht. Dabei ist der Kreisbogen 20 in der Rast- und/oder Schnappaufnahme 16 so bemessen und gestaltet, dass er den Außendurchmesser des Befestigungselements in der Art einer Rasteinrichtung umgreift. Beim Zusammenführen eines Befestigungselements mit dem Aufnahmeelement 1 schnappt oder verrastet die Rast- und/oder Schnappaufnahme 16 des Aufnahmeelements 1 mit dem Befestigungselement.

In den Figuren 4 bis 6 sieht man, wie das Befestigungselement 2 in der Aufnahme 6 des Aufnahmeelements 1 aufgenommen ist. Das Befestigungselement 2 ist als Nagel mit einem Nagelkopf 22 und einer Nagelspitze 24 ausgeführt. Der Nagelkopf 22 liegt an einem Ende des Aufnahmegrundkörpers 4 an. Das Befestigungselement 2 erstreckt sich von dem Nagelkopf 22 durch das zentrale Durchgangsloch 5 des Aufnahmegrundkörpers 4 hindurch. Die Nagelspitze 24 des Befestigungselements 2 ragt aus dem Aufnahmegrundkörper 4 heraus. Das Befestigungselement 2 ist mit etwa einem Viertel seiner Gesamtlänge in dem Aufnahmegrundkörper 4 angeordnet.

In den Figuren 4 bis 6 sieht man des Weiteren, dass eine Rast- und/oder Schnappaufnahme 26 des Aufnahmeelements 21 so in der Ausnehmung 8 des Aufnahmeelements 1 angeordnet ist, dass die Rast- und/oder Schnappaufnahme 26 den Außendurchmesser des Befestigungselements 2 umgreift, um eine Rastverbindung oder Schnappverbindung zwischen dem Aufnahmeelement 21 und dem Befestigungselement 2 herzustellen. Die Schnappverbindung oder Rastverbindung kann wiederholt zerstörungsfrei getrennt werden. Wenn gewünscht, kann die Rast- und/oder Schnappverbindung auch so ausgelegt werden, dass sie beim Lösen bricht.

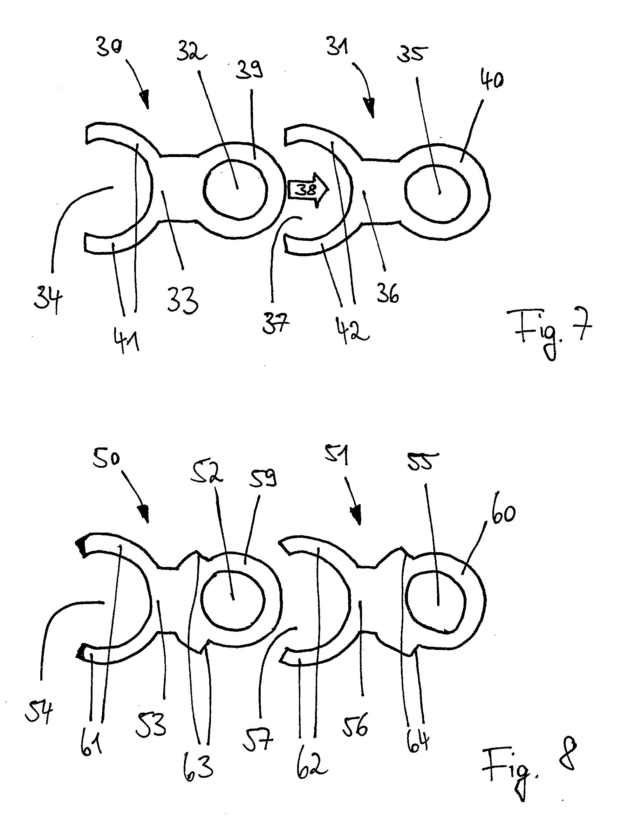

In Fig. 7 sind ein erstes Aufnahmeelement 30 und ein zweites Aufnahmeelement 31 in einer Draufsicht dargestellt, die jeweils als Spritzgussteil aus Kunststoff hergestellt sind. Das erste Aufnahmeelement 30 weist eine erste Aufnahme 32 für ein nicht gezeigtes erstes Befestigungselement und einen Verbindungsansatz 33 mit einer Rastaufnahme 34 auf. Das zweite Aufnahmeelement 31 weist eine zweite Aufnahme 35 für ein nicht gezeigtes zweites Befestigungselement und einen Verbindungsansatz 36 mit einer zweiten Rastaufnahme 37 auf. Die Aufnahmen 32, 35 sind dabei jeweils durch ein zentrales Durchgangsloch in einem zylindrischen ersten Aufnahmegrundkörper 39 beziehungsweise in einem zylindrischen zweiten Aufnahmegrundkörper 40 gebildet. Der Innendurchmesser der Durchgangslöcher ist dabei jeweils gleich dem Außendurchmesser der nicht gezeigten Befestigungselemente.

Die Rastaufnahmen 34, 37 werden durch kreisbogenförmige erste Rastarme 41 beziehungsweise kreisbogenförmige zweite Rastarme 42 gebildet, welche zusammen einen Kreisbogen von etwa 210 Grad bilden. Der Innendurchmesser des Kreisbogens ist dabei genau so gross wie der Außendurchmesser der jeweiligen Aufnahmegrundkörper 39, 40. Somit haben die jeweiligen freien Enden beispielsweise der zweiten Rastarme 42 einen Abstand zueinander, der kleiner als der Außendurchmesser des Aufnahmegrundkörpers 39 ist. Bei einem nicht dargestellten Ausführungsbeispiel ist die Rastaufnahme gegen die Aufnahme des benachbarten Aufnahmeelements vorgespannt, indem der Innendurchmesser des Kreisbogens kleiner als der Außendurchmesser der jeweiligen Aufnahmegrundkörper ist.

Durch Einrasten der ersten Aufnahme 32 in die zweite Rastaufnahme 37 entlang des Pfeils 38 ist somit das erste Aufnahmeelement 30 mit dem zweiten Aufnahmeelement 31 verbindbar. Der erste Aufnahmegrundkörper 39 wird dabei von der zweiten Rastaufnahme 37 beziehungsweise deren zweiten Rastarmen 42 umgriffen. Auf diese Weise sind beliebig viele Aufnahmeelemente, die jeweils ein Befestigungselement aufnehmen, schwenkbar miteinander zu einem Streifen verbindbar, wobei die Schwenkachse jeweils senkrecht zur Zeichenebene von Fig. 7 durch die Symmetrieachse des Aufnahmegrundkörpers 39 verläuft. Bei einem Verschwenken gleiten dabei beispielsweise die zweiten Rastarme 42 tangential auf der Außenseite des ersten Aufnahmegrundkörpers 39 entlang. Der Streifen wird dann beispielsweise aufgerollt und gegebenenfalls in ein Rollmagazin eingesetzt.

In Fig. 8 sind ein erstes Aufnahmeelement 50 und ein zweites Aufnahmeelement 51 gemäß einem weiteren Ausführungsbeispiel in einer Draufsicht dargestellt. Das erste Aufnahmeelement 50 weist eine erste Aufnahme 52 für ein nicht gezeigtes erstes Befestigungselement und einen Verbindungsansatz 53 mit einer Rastaufnahme 54 auf. Das zweite Aufnahmeelement 51 weist eine zweite Aufnahme 55 für ein nicht gezeigtes zweites Befestigungselement und einen Verbindungsansatz 56 mit einer zweiten Rastaufnahme 57 auf. Die Aufnahmen 52, 55 sind dabei jeweils durch ein zentrales Durchgangsloch in einem zylindrischen ersten Aufnahmegrundkörper 59 beziehungsweise in einem zylindrischen zweiten Aufnahmegrundkörper 60 gebildet. Der erste Aufnahmegrundkörper 59 weist auf seiner Außenseite erste Absätze 63 auf, der zweite Aufnahmegrundkörper 60 weist auf seiner Außenseite zweite Absätze 64 auf. Die Rastaufnahmen 54, 57 werden durch kreisbogenförmige erste Rastarme 61 beziehungsweise kreisbogenförmige zweite Rastarme 62 gebildet.

Bei einem Einrasten der ersten Aufnahme 52 in die zweite Rastaufnahme 57 wird der erste Aufnahmegrundkörper 59 von der zweiten Rastaufnahme 57 beziehungsweise deren zweiten Rastarmen 62 umgriffen. Die freien Enden der zweiten Rastarme 62 stoßen dann an die Absätze 63 an, so dass ein Verschwenken um eine Achse senkrecht zur Zeichenebene von Fig. 8 wirksam verhindert ist. Auf diese Weise sind wiederum beliebig viele Aufnahmeelemente, die jeweils ein Befestigungselement aufnehmen, zu einem relativ steifen Streifen miteinander verbindbar, wobei die Steifigkeit den Streifen besser handhabbar macht.

## Patentansprüche

1. Aufnahmeelement für ein erstes und ein zweites Befestigungselement zur Verwendung in Bolzensetzgeräten, mit einer Aufnahme (6) für das erste Befestigungselement (2) und mit einem Verbindungsansatz (15), der insbesondere zusammen mit dem zweiten Befestigungselement dazu dient, das Aufnahmeelement (1) scharnierartig, kettengliedartig und/oder schwenkbar mit einem zweiten Aufnahmeelement (21) zu verbinden, **dadurch gekennzeichnet, dass** der Verbindungsansatz (15) eine Rast- und/oder Schnappaufnahme (16;26) für das zweite Befestigungselement und/oder das zweite Aufnahmeelement aufweist.

2. Aufnahmeelement nach Anspruch 1, **dadurch gekennzeichnet, dass** die Aufnahme (6) für das erste Befestigungselement (2) eine Ausnehmung (8) für die Rast- und/oder Schnappaufnahme eines dritten Aufnahmeelements aufweist.

3. Aufnahmeelement nach Anspruch 2, **dadurch gekennzeichnet, dass** die Ausnehmung (8) größer als die Rast- und/oder Schnappaufnahme (16;26) ist.

4. Aufnahmeelement nach einem der vorhergehenden Ansprüche, **dadurch gekennzeichnet, dass** die Aufnahme für das erste Befestigungselement (2) ein zentrales Durchgangsloch (5) ist, das sich durch einen Aufnahmegrundkörper (4) erstreckt.

5. Aufnahmeelement nach Anspruch 4, **dadurch gekennzeichnet, dass** der Aufnahmegrundkörper (4) die Gestalt eines geraden Kreiszylinders aufweist, der durch die Ausnehmung (8) für die Rast- und/oder Schnappaufnahme des dritten Aufnahmeelements unterbrochen ist.

6. Aufnahmeelement nach Anspruch 4 oder 5, **dadurch gekennzeichnet, dass** der Aufnahmegrundkörper (4) durch die Ausnehmung (8) für die Rast- und/oder Schnappaufnahme des dritten Aufnahmeelements in zwei Halbkörper (11,12) unterteilt ist, die durch einen Verbindungssteg (14) miteinander verbunden sind.

7. Aufnahmeelement nach Anspruch 6, **dadurch gekennzeichnet, dass** die Rast- und/oder Schnappaufnahme (16;26) von dem Verbindungssteg (14) ausgeht.

8. Aufnahmeelement nach Anspruch 7, **dadurch gekennzeichnet, dass** die Rast- und/oder Schnappaufnahme (16;26) und der Verbindungssteg (14) durch ein Distanzstück (18) einstückig miteinander verbunden sind.

9. Aufnahmeelement nach einem der vorhergehenden Ansprüche, **dadurch gekennzeichnet, dass** die Rast- und/oder Schnappaufnahme (16;26) die Gestalt eines Kreisbogens aufweist, der das zweite Befestigungselement (2) und/oder das zweite Aufnahmeelement teilweise umgreift.

10. Aufnahmeelement nach einem der vorhergehenden Ansprüche, **dadurch gekennzeichnet, dass** zwei freie Enden der Rast- und/oder Schnappaufnahme (16;26) in einem Abstand zueinander angeordnet sind, der kleiner als der Außendurchmesser der Befestigungselemente (2) und/oder kleiner als der Außendurchmesser der Aufnahme (6) ist.

11. Aufnahmeelement nach einem der vorhergehenden Ansprüche, **dadurch gekennzeichnet, dass** ein Innendurchmesser der Rast- und/oder Schnappaufnahme (16;26) dem Außendurchmesser der Befestigungselemente (2) und/oder dem Außendurchmesser der Aufnahme (6) entspricht.

12. Aufnahmeelement nach einem der vorhergehenden Ansprüche, **dadurch gekennzeichnet, dass** das Aufnahmeelement (1,21) als Spritzgussteil aus Kunststoff ausgeführt ist.

13. Befestigungselemente-Magazinstreifen mit mehreren Befestigungselementen (2), die durch Aufnahmeelemente (1,21) nach einem der vorhergehenden Ansprüche scharnierartig, kettengliedartig und/oder schwenkbar miteinander verbunden sind.

14. Befestigungselemente-Magazinstreifen nach Anspruch 13, **dadurch gekennzeichnet, dass** die Aufnahmeelemente (1,21) als Gleichteile ausgeführt sind.

15. Befestigungselemente-Magazinstreifen nach einem der Ansprüche 13 und 14, **dadurch gekennzeichnet, dass** die Befestigungselemente (2) als Gleichteile ausgeführt sind.

## Claims

1. A holder for accommodating a first and a second fastener for use in bolt-firing tools, comprising a space (6) for receiving the first fastener (2) and a connecting projection (15) which, together with the second fastener, specifically serves to connect the holder (1) to a second holder (21) in the way of a hinge, chain link and/or swivelling connection, **characterized in that** the connecting projection (15) consists of a clip- or snap-in portion (16; 26) designed to grip the second fastener and/or second holder.

2. A holder according to Claim 1, **characterized in that** the space (6) for receiving the first fastener (2) includes a recess (8) for the clip- and/or snap-in gripping portion of a third holder.

3. A holder according to Claim 2, **characterized in that** the recess (8) is larger than the clip- and/or snap-in gripping portion (16; 26).

4. A holder according to one of the preceding claims, **characterized in that** the space (6) for receiving the first fastener (2) consists of a central through hole (5) which extends through the basic body (4) of the holder.

5. A holder according to Claim 4, **characterized in that** the basic body (4) of the holder has the shape of a right circular cylinder, which is interrupted by the recess (8) for the clip- and/or snap-in gripping portion of the third holder.

6. A holder according to Claim 4 or 5, **characterized in that** the basic body (4) of the holder is divided by the recess (8), provided for the clip- and/or snap-in gripping portion of the third holder, into two halves (11, 12) which are joined together by a connecting web (14).

7. A holder according to Claim 6, **characterized in that** the clip- and/or snap-in gripping portion (16; 26) extends from the connecting web (14).

8. A holder according to Claim 7, **characterized in that** the clip- and/or snap-in gripping portion (16; 26) and the connecting web (14) are joined together to form a single piece by means of a distance piece (18).

9. A holder according to one of the preceding claims, **characterized in that** the clip- and/or snap-in gripping portion (16; 26) has the shape of a circular arc, which partly surrounds the second fastener (2) and/or second holder.

10. A holder according to one of the preceding claims, **characterized in that** two free ends of the clip- and/or snap-in gripping portion (16; 26) are disposed at a distance from one another which is less than the outer diameter of the fasteners (2) and/or is smaller than the outer diameter of the receiving space (6).

11. A holder according to one of the preceding claims, **characterized in that** an inner diameter of the clip- and/or snap-in gripping portion (16; 26) corresponds to the outer diameter of the fasteners (2) and/or the outer diameter of the receiving space (6).

12. A holder according to one of the preceding claims, **characterized in that** the holder (1, 21) is formed as an injection moulded part made of plastic.

13. A fastener magazine strip comprising a plurality of fasteners (2), which are joined together by holders (1, 21) according to one of the preceding claims in the way of a hinge, chain link and/or swivelling connection.

14. A fastener magazine strip according to Claim 13, **characterized in that** the holders (1, 21) are made as identical components.

15. A fastener magazine strip according to one of Claims 13 or 14, **characterized in that** the fasteners (2) are made as identical components.

## Revendications

1. Elément récepteur pour un premier et un second élément de fixation pour une utilisation dans des appareils de pose de boulons, comportant un logement (6) pour le premier élément de fixation (2) et une saillie de liaison (15) qui, en particulier en association avec le second élément de fixation, sert à assembler l'élément récepteur (1) avec un deuxième élément récepteur (21) de manière articulée, à la manière d'un maillon de chaîne et/ou de façon à pouvoir pivoter, **caractérisé en ce que** la saillie de liaison (15) comporte un logement d'encliquetage et/ou d'enclenchement (16 ; 26) pour le second élément de fixation et/ou le deuxième élément récepteur.

2. Elément récepteur selon la revendication 1, **caractérisé en ce que** le logement (6) pour le premier élément de fixation (2) comporte un évidement (8) pour le logement d'encliquetage et/ou d'enclenchement d'un troisième élément récepteur.

3. Elément récepteur selon la revendication 2, **caractérisé en ce que** l'évidement (8) est plus grand que le logement d'encliquetage et/ou d'enclenchement (16 ; 26).

4. Elément récepteur selon l'une des revendications précédentes, **caractérisé en ce que** le logement pour le premier élément de fixation (2) est un trou traversant central (56) qui s'étend à travers un corps de base récepteur (4).

5. Elément récepteurselon la revendication 4, **caractérisé en ce que** le corps de base récepteur (4) a la forme d'un cylindre circulaire droit qui est interrompu par l'évidement (8) pour le logement d'encliquetage et/ou d'enclenchement du troisième élément récepteur.

6. Elément récepteur selon la revendication 4 ou 5, **caractérisé en ce que** le corps de base récepteur (4) est divisé en deux demi-corps (11, 12) par l'évidement (8) pour le logement d'encliquetage et/ou d'enclenchement du troisième élément récepteur, lesquels deux demi-corps sont reliés l'un à l'autre par une languette de liaison (14).

7. Elément récepteur selon la revendication 6, **caractérisé en ce que** le logement d'encliquetage et/ou d'enclenchement (16 ; 26) débute à partir de la languette de liaison (14).

8. Elément récepteur selon la revendication 7, **caractérisé en ce que** le logement d'encliquetage et/ou d'enclenchement (16 ; 26) et la languette de liaison (14) sont reliés l'un à l'autre d'une seule pièce par une entretoise (18).

9. Elément récepteur selon l'une des revendications précédentes, **caractérisé en ce que** le logement d'encliquetage et/ou d'enclenchement (16 ; 26) a la forme d'un arc de cercle venant partiellement en prise autour du second élément de fixation (2) et/ou du deuxième élément récepteur.

10. Elément récepteur selon l'une des revendications précédentes, **caractérisé en ce que** deux extrémités libres du logement d'encliquetage et/ou d'enclenchement (16 ; 26) sont agencées à une distance l'une de l'autre qui est inférieure au diamètre extérieur des éléments de fixation (2) et/ou inférieure au diamètre extérieur du logement (6).

11. Elément récepteur selon l'une des revendications précédentes, **caractérisé en ce qu'**un diamètre intérieur du logement d'encliquetage et/ou d'enclenchement (16 ; 26) correspond au diamètre extérieur des éléments de fixation (2) et/ou au diamètre extérieur du logement (6).

12. Elément récepteur selon l'une des revendications précédentes, **caractérisé en ce que** l'élément récepteur (1, 21) est réalisé sous la forme d'une pièce moulée par injection en matière plastique.

13. Bande de magasin de chargement d'éléments de fixation comportant plusieurs éléments de fixation (2) qui sont reliés les uns aux autres de manière articulée, à la manière d'un maillon de chaîne et/ou de façon à pouvoir pivoter, par des éléments récepteur (1, 21) selon l'une des revendications précédentes.

14. Bande de magasin de chargement d'éléments de fixation selon la revendication 13, **caractérisée en ce que** les éléments récepteur (1, 21) sont réalisés sous la forme de pièces identiques.

15. Bande de magasin de chargement d'éléments de fixation selon l'une des revendications 13 et 14, **caractérisée en ce que** les éléments de fixation (2) sont réalisés sous la forme de pièces identiques.
